# EUROPEAN PATENT APPLICATION

(11) **EP 3 331 250 A1**
(43) Date of publication of application: **06.06.2018**
(21) Application number: 17210508.2
(22) Date of filing: 28.07.2004
(51) Int. Cl.: H04Q 9/00, B01D 1/06, B01D 1/22, B01D 1/28, B01D 3/10, B01D 3/42, B01D 5/00, B01D 35/12, B01D 29/01, F04C 19/00, F04C 29/00, B01D 29/66, B01D 29/52, B01D 29/96

(54) **SYSTEMS AND METHODS FOR DISTRIBUTED UTILITIES**

(30) Priority: 28.07.2003 US 490615 P; 10.11.2003 US 518782 P
(62) Divisional of application: 14185994.2
(71) Applicant: DEKA Products Limited Partnership, Manchester, NH 03101-1108 (US)
(72) Inventor: KAMEN, Dean, Bedford, NH New Hampshire 03110 (US); DEMERS, Jason A, Manchester, NH New Hampshire 03104 (US); OWENS, Kingston, Bedford, NH New Hampshire (US)
(74) Representative: Gill Jennings & Every LLP

(57) **Abstract**

A monitoring system for distributed utilities. A generation device is provided for converting an available resource to a desired utility; the resource may be water, in which case the generator is a purifier for providing potable water, or, alternatively, the generator may convert a fuel to electrical power. In either case, an input sensor is provided for measuring input to the generation device, while an output sensor is provided for measuring consumption of output from the generation device. The monitoring system has a controller for concatenating measured input and consumption of output on the basis of the input and output sensors. Measured parameters are telemetered to a remote site where utility generation and use are monitored and may also be controlled.

## Description

### Technical Field

The present invention relates to the field of distributed utilities, and, more particularly, to distributed water purification systems and distributed power.

### Background Art

In many developing countries and remote areas without power plants and water purification plants, access to electricity and safe drinking water is a significant need. Often in such areas, poor financial resources, limited technical assets, and low population density does not make it feasible to build power plants and water purification plants to provide these resources to the population. In such circumstances, the use of distributed utilities may provide a solution. Distributed water purification systems, such as described in US Provisional Application 60/425,820, and distributed electrical generators, such as diesel-powered internal combustion generators and generators based on the Stirling cycle, such as described in U.S. Patent No. 6,253,550, may be used to provide electricity and safe drinking water without the expense and delays associated with building and maintaining utility plants and the infrastructure required to bring the electricity and safe drinking water and to its point of use. With such the use of such distributed utilities, however, comes the need to appropriately distribute these utilities to the people who need them and to monitor the operation and correct usage of these systems.

### Summary of the Invention

In accordance with preferred embodiments of the present invention, a monitoring system for distributed utilities is provided. The monitoring system has a generation device for converting an available resource to a desired utility. The available resource may be water, in which case the generator is a purifier for providing potable water. Alternatively, the generator may convert a fuel to electrical power. In either case, an input sensor is provided for measuring one or more characteristics of the input to the generation device, while an output sensor is provided for measuring consumption or other characteristic of output from the generation device. The monitoring system has a controller for concatenating measured input and consumption of output on the basis of the input and output sensors.

Where the generation device, in the case, for example, of a particular utility of a network, is a water purifier, the input sensor may be a flow rate monitor. The output sensor may be a water quality sensor including one or more of turpidity, conductivity, and temperature sensors. On the other hand, where the generation device is an electrical power generator, the input sensor may include a fuel consumption rate monitor and the output sensor may include an electrical usage meter.

The monitoring system may also have a telemetry module for communicating measured input and output parameters to a remote site, either directly or via an intermediary device such as a satellite, and, moreover, the system may include a remote actuator for varying operating parameters of the generator based on remotely received instructions. The monitoring system may also have a self-locating device, such as a GPS receiver, having an output indicative of the location of the monitoring system. In that case, characteristics of the measured input and output may depend upon the location of the monitoring system.

In accordance with further embodiments of the invention, a distributed network of utilities is provided, including sources of purified water and sources of electrical power. The distributed network has generators for converting a resource into a useful utility, input sensors for measuring inputs to respective generators, output sensor for measuring consumption of output from respective generators, and a telemetry transmitter for transmitting input and output parameters of a specified generator. Finally, the distributed network has a remote processor for receiving input and output parameters from a plurality of utility generators.

In accordance with yet another embodiment of the invention, a method is provided for supplying distributed utilities. The method has steps of providing a generator to a user, monitoring at least one index of generator usage to supply a utility, and charging the user on the basis of the index of generator usage.

In accordance with other aspects of the present invention, methods are provided for assembling monitoring systems that monitor input to, and consumption of output from, a generating device. These methods include coupling sensors to a controller of the generating device, and communication channels between the controller and a monitoring station via a telemetry module.

### Brief Description of the Drawings

The foregoing features of the invention will be more readily understood by reference to the following detailed description, taken with reference to the accompanying drawings, in which:
Fig. 1 is a depiction of a monitoring system for distributed utilities in accordance with embodiments of the present invention; and
Fig. 2 is a depiction of a distribution system for utilities in accordance with embodiments of the present invention.

### Detailed Description of Specific Embodiments

### Monitoring

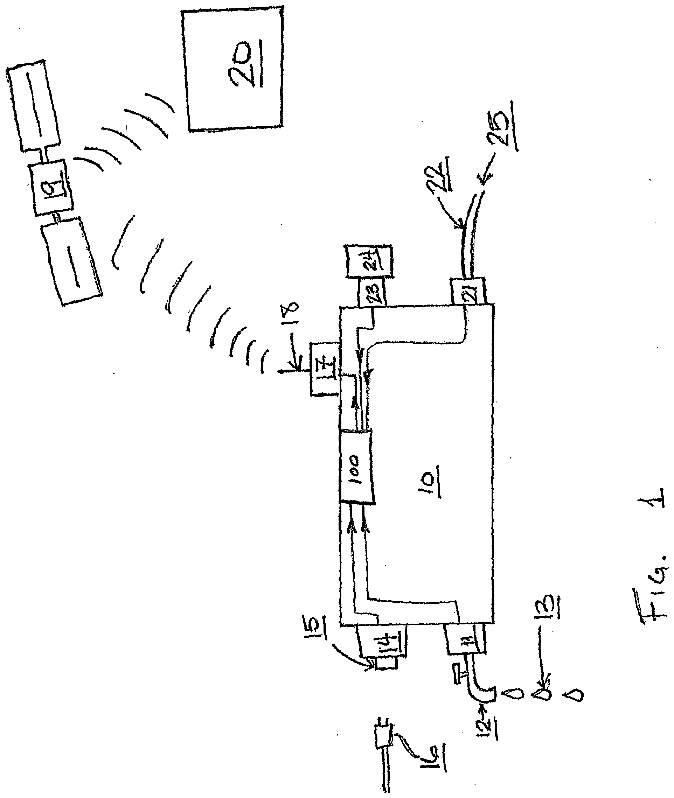

Referring first to Fig. 1, preferred embodiments of the present invention provide for monitoring generation device 10. Generation device 10 can be any distributed utility generation device, such as a water purification system, an electrical generator, or other utility generation device, or a combination of these. Generation device 10 may typically be characterized by a set of parameters that describe its current operating status and conditions. Such parameters may include, without limitation, its temperature, its input or output flux, etc., and may be subject to monitoring by means of sensors, as described in detail below.

In the case in which generation device **10** is a water purification device, source water enters the generation device **10** at inlet **22** and leaves the generation device at outlet **12.** The amount of source water **25** entering generation device **10** and the amount of purified water **13** leaving generation device **10** can be monitored through the use of one or more of a variety of sensors commonly used to determine flow rate, such as sensors for determining them temperature and pressure or a rotometer, located at inlet sensor module **21** and/or at outlet sensor module **11,** either on a per event or cumulative basis. Additionally, the proper functioning of the generation device **10** can be determined by measuring the turpidity, conductivity, and/or temperature at the outlet sensor module **11** and/or the inlet sensor module **21.** Other parameters, such as system usage time or power consumption, either per event or cumulatively, can also be determined. A sensor can be coupled to an alarm or shut off switch that may be triggered when the sensor detects a value outside a pre-programmed range.

When the location of the system is known, either through direct input of the system location or by the use of a GPS location detector, additional water quality tests may be run based on location, including checks for known local water contaminates, utilizing a variety of detectors, such as antibody chip detectors or cell-based detectors. The water quality sensors may detect an amount of contaminates in water. The sensors can be programmed to sound an alarm if the water quality value rises above a pre-programmed water quality value. The water quality value is the measured amount of contaminates in the water. Alternatively, a shut off switch may turn off the generation device if the water quality value rises about a pre-programmed water quality value.

Further, scale build-up in the generation device **10,** if any, can be determined by a variety of methods, including monitoring the heat transfer properties of the system or measuring the flow impedance. A variety of other sensors may be used to monitor a variety of other system parameters.

In the case in which generation device **10** is an electrical generator, either alone or in combination with a water purification device or other device, fuel enters the generation device from a tank, pipe, or other means through fuel inlet **24.** The amount of fuel consumed by generation device **10** can be determined through the use of a fuel sensor **23,** such as a flow sensor. Electricity generated, or in the case of a combined electrical generator and water purification device, excess electricity generated can be accessed through electricity outlet **15.** The amount of electricity used, either per event of cumulatively, may be determined by outlet sensor module **14.** A variety of other sensors may be used to monitor a variety of other system parameters.

In either of the cases described above, input sensor modules **21** and **23** as well as output sensor modules **11** and **14** may be coupled to a controller **100,** electrically or otherwise, in order to process, concatenate, store, or communicate the output values of the respective sensor modules as now described in the following section.

### Communications

The sensors described above may be used to monitor and/or record the various parameters described above onboard the generation device **10,** or in an alternative embodiment of the present invention, the generation device **10** may be equipped with a communication system **17,** such as a cellular communication system. The communication system **17** could be an internal system used solely for communication between the generation device **10** and the monitoring station **20.** Alternatively, the communication system **17** could be a cellular communication system that includes a cellular telephone for general communication through a cellular satellite system **19.** The communication system **17** may also employ wireless technology such as the Bluetooth® open specification. The communication system **17** may additionally include a GPS (Global Positioning System) locator.

Communication system **17** enables a variety of improvements to the generation device **10,** by enabling communication with a monitoring station **20.** For example, the monitoring station **20** may monitor the location of the generation device **10** to ensure that use in an intended location by an intended user. Additionally, the monitoring station **20** may monitor the amount of water and/or electricity produced, which may allow the calculation of usage charges. Additionally, the determination of the amount of water and/or electricity produced during a certain period or the cumulative hours of usage during a certain period, allows for the calculation of a preventative maintenance schedule. If it is determined that a maintenance call is required, either by the calculation of usage or by the output of any of the sensors used to determine water quality, the monitoring station **20** can arrange for a maintenance visit. In the case that a GPS (Global Positioning System) locator is in use, monitoring station **20** can determine the precise location of the generation device **10** to better facilitate a maintenance visit. The monitoring station **20** can also determine which water quality or other tests are most appropriate for the present location of the generation device **10.** The communication system **17** can also be used to turn the generation device **10** on or off, to pre-heat the device prior to use, or to deactivate the system in the event the system is relocated without advance warning, such as in the event of theft.

This information can be advantageously monitored through the use of a web-based utility monitoring system, such as those produced by Teletrol Systems, Inc. of Bedford, New Hampshire.

### Distribution

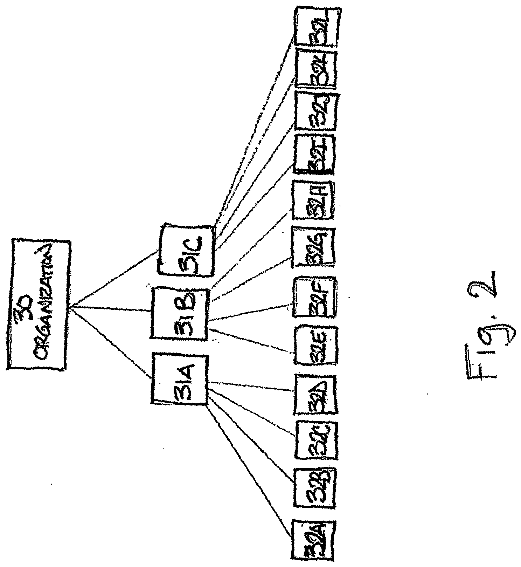

The use of the monitoring and communication system described above facilitates the use of a variety of utility distribution systems. For example, with reference to Figure 2, an organization **30,** such as a Government agency, non-governmental agency (NGO), or privately funded relief organization, a corporation, or a combination of these, could provide distributed utilities, such as safe drinking water or electricity, to a geographical or political area, such as an entire country. The organization **30** can then establish local distributors **31A, 31B,** and **31C.** These local distributors could preferably be a monitoring station **20** described above. In one possible arrangement, organization 30 could provide some number of generation devices **10** to the local distributor **31A,** etc. In another possible arrangement, the organization **30** could sell, loan, or make other financial arrangements for the distribution of the generation devices **10.** The local distributor **31A,** etc. could then either give these generation devices to operators **32A, 32 B,** etc., or provide the generation devices **10** to the operators though some type of financial arrangement, such as a sale or micro-loan.

The operator **32** could then provide distributed utilities to a village center, school, hospital, or other group at or near the point of water access. In one preferred embodiment, when the generation device **10** is provided to the operator **32** by means of a micro-loan, the operator **32** could charge the end users on a per-unit bases, such as per watt hour in the case of electricity or per liter in the case of purified water. Either the local distributor **31** or the organization **30** may monitor usage and other parameters using one of the communication systems described above. The distributor **31** or the organization **30** could then recoup some of the cost of the generation device **10** or effect repayment of the micro-loan by charging the operator **32** for some portion of the per-unit charges, such as 50%. The communication systems described additionally can be used to deactivate the generation device **10** if the generation device is relocated outside of a preset area or if payments are not made in a timely manner. This type of a distribution system may allow the distribution of needed utilities across a significant area quickly, while then allowing for at least the partial recoupment of funds, which, for example, could then be used to develop a similar system in another area.

In view of the foregoing, it will therefore be understood that the scope of the invention as defined in the following claims is not limited to the embodiments described herein, and that the above and numerous additional variations and modifications could be made thereto without departing from the scope of the invention..

The following are particularly preferred aspects according to the present disclosure:
Numbered clause 1. A monitoring system for distributed utilities, the monitoring system comprising:
   a. a generation device for converting an available resource to a desired utility, the generation device characterized by a plurality of operating parameters;
   b. an input sensor for measuring input to the generation device;
   c. an output sensor for measuring consumption of output from the generation device;
   d. a controller for concatenating measured input and consumption of output on the basis of the input and output sensors.
Numbered clause 2. A monitoring system according to numbered clause 1, further comprising at least one sensor for measuring at least one parameter of the said plurality of operating parameters of the generation device.
Numbered clause 3. A monitoring system according to numbered clause 1, wherein the at least one sensor is a heat transfer monitor.
Numbered clause 4. A monitoring system according to numbered clause 1, wherein the at least one sensor is a flow impedance monitor.
Numbered clause 5. A monitoring system according to numbered clause 1, wherein the generation device is a water purifier.
Numbered clause 6. A monitoring system according to numbered clause 5, wherein the input sensor is a flowrate monitor.
Numbered clause 7. A monitoring system according to numbered clause 6, wherein the output sensor includes a water quality sensor including at least one of a torpidity, conductivity, and temperature sensor.
Numbered clause 8. A monitoring system according to numbered clause 7, further comprising a shut off switch that automatically turns off said generation device when said water quality sensor rises above a pre-programmed water quality value.
Numbered clause 9. A monitoring system according to numbered clause 7, further comprising an alarm that alerts a user when said water quality value rises above a pre-programmed water quality value.
Numbered clause 10. A monitoring system according to numbered clause 7, further comprising a remotely operable shut off switch.
Numbered clause 11. A monitoring system according to numbered clause 1, wherein the generation device is an electrical power generator.
Numbered clause 12. A monitoring system according to numbered clause 11, wherein the input sensor includes a fuel consumption rate monitor.
Numbered clause 13. A monitoring system according to numbered clause 11, wherein the output sensor includes an electrical usage meter monitor.
Numbered clause 14. A monitoring system according to numbered clause 1, further comprising a telemetry module for communicating measured input and output parameters to a remote site.
Numbered clause 15. A monitoring system according to numbered clause 14, wherein the telemetry module is a cellular communications system.
Numbered clause 16. A monitoring system according to numbered clause 14, wherein the telemetry module is a wireless system.
Numbered clause 17. A monitoring system according to numbered clause 1, further including a remote actuator for varying operating parameters of the generator based on remotely received instructions.
Numbered clause 18. A monitoring system according to numbered clause 1, further including a self-locating device having an output indicative of the location of the monitoring system.
Numbered clause19. A monitoring system according to numbered clause 18, wherein the self-locating device is a global positioning system.
Numbered clause 20. A monitoring system according to numbered clause 18, wherein monitored characteristics of input and output depend upon the location of the monitoring system.
Numbered clause 21. A method for assembling a monitoring system comprising:
   a. providing a generation device;
   b. coupling an input sensor for measuring input to the generation device;
   c. coupling an output sensor for measuring consumption of output from the generation device; and
   d. coupling a controller to the input and output sensor for concatenating measured input and consumption of output on the basis of the input and output sensors.
Numbered clause 22. The method of claim 21 , further comprising:
   a. providing communication between a telemetry module and said controller; and
   b. providing communication between said telemetry module and a monitoring station.
Numbered clause 23. A distributed network of utilities, including at least one of a source of purified water and a source of electrical power, the distributed network comprising:
   a. generators for converting a resource into a useful utility;
   b. input sensors for measuring inputs to respective generators;
   c. output sensor for measuring consumption of output from respective generators;
   d. a telemetry transmitter for transmitting input and output parameters of a specified generator; and
   e. a remote processor for receiving input and output parameters from a plurality of utility generators.
Numbered clause 24. A method for providing distributed utilities, the method comprising:
   a. providing a generator to a user;
   b. monitoring at least one index of generator usage to supply a utility; and
   c. charging the user on the basis of the index of generator usage.
Numbered clause 25. A monitoring system for distributed utilities, the monitoring system comprising: a water purification device adapted to converting available water to purified water, the water purification device characterised by a plurality of operating parameters; an input sensor module comprising at least one input sensor adapted to measure source water input to the water purification device; an output sensor module comprising at least one water quality sensor adapted to measure the quality of the purified water output from the water purification device; and a controller adapted to determine the proper functioning of the water purification device from signals sent by the input sensor module and the output sensor module.
Numbered clause 26. A monitoring system according to clause 1, wherein the at least one input sensor or the at least one water quality sensor is a flowrate monitor.
Numbered clause 27. A monitoring system according to clause 1, wherein the at least one water quality sensor or the at least one input sensor is a turpidity sensor.
Numbered clause 28. A monitoring system according to clause 1, wherein the at least one water quality sensor or the at least one input sensor is a conductivity sensor.
Numbered clause 29. A monitoring system according to clause 1, wherein the at least one water quality sensor or the at least one input sensor is a temperature sensor.
Numbered clause 30. A monitoring system according to clause 1, wherein the at least one water quality sensor or the at least one input sensor is a heat transfer monitor.
Numbered clause 31. A monitoring system according to clause 1, further including a self-locating device having an output indicative of the location of the monitoring system.
Numbered clause 32. A monitoring system according to clause 1, further comprising a shut off switch that automatically turns off the water purification device when the at least one water quality sensor rises above a pre-programmed water quality value.
Numbered clause 33. A monitoring system according to clause 8, further comprising an alarm that alerts a user when the water quality value rises above a pre-programmed water quality value.
Numbered clause 34. A monitoring system according to clause 8, further comprising a remotely operable shut off switch.
Numbered clause 35. A monitoring system according to clause 1, further comprising a telemetry module adapted to communicate measured input and output parameters to a remote site.
Numbered clause 36. A monitoring system according to clause 11, wherein the telemetry module is a wireless system.
Numbered clause 37. A monitoring system according to clause 1, further including a remote actuator adapted to vary operating parameters of the water purification device based on remotely received instructions.
Numbered clause 38. A monitoring system according to clause 7, wherein the self-locating device is a global positioning system.
Numbered clause 39. A monitoring system according to clause 7, wherein monitored characteristics of input and output depend upon the location of the monitoring system.

## Claims

1. A monitoring system for water purification, the monitoring system comprising:
A first subsystem comprising:
a water purification device (10) adapted to convert available source water (25) to purified water (13);
an input sensor module (21) comprising at least one input sensor adapted to measure a property of the source water input to the water purification device;
an output sensor module (11) comprising at least one water quality sensor adapted to measure the quality of the purified water output from the water purification device; and
a second subsystem comprising:
a monitoring station (20) configured to wirelessly communicate with a communication system (17) included in the first subsystem and analyze data received from the output sensor module (11).

2. A monitoring system according to claim 1, wherein the at least one input sensor or the at least one water quality sensor is a flowrate monitor.

3. A monitoring system according to claim 1, wherein the at least one water quality sensor or the at least one input sensor is a turpidity sensor.

4. A monitoring system according to claim 1, wherein the at least one water quality sensor or the at least one input sensor is a conductivity sensor.

5. A monitoring system according to claim 1, wherein the at least one water quality sensor or the at least one input sensor is a temperature sensor.

6. A monitoring system according to claim 1, wherein the at least one water quality sensor or the at least one input sensor is a heat transfer monitor.

7. A monitoring system according to claim 1, further including a self-locating device in the water purification device having an output indicative of the location of the water purification device.

8. A monitoring system according to claim 7, wherein the self-locating device includes a global positioning system.

9. A monitoring system according to claim 7, wherein the monitoring station (20) is configured to deactivate the water purification device via the communication system (17) based on the output indicative of the location.

10. A monitoring system according to claim 1, further comprising a shut off switch that automatically actuates when a water quality value output from the at least one water quality sensor rises above a pre-programmed water quality value.

11. A monitoring system according to claim 10, further comprising an alarm that alerts a user when the water quality value rises above a pre-programmed water quality value.

12. A monitoring system according to claim 10, further comprising a remotely operable shut off switch controlled via the monitoring station (20).

13. A monitoring system according to claim 1, the monitoring station (20) is configured to wirelessly communicate with the communication system (17) over Bluetooth.

14. A monitoring system according to claim 1, wherein the monitoring station (20) is configured to wirelessly communicate with the communication system (17) over the web.

15. A monitoring system according to claim 1, further including a remote actuator adapted to vary operating parameters of the water purification device based on remotely received instructions from the monitoring station (20).

16. A monitoring system according to claim 1, wherein the monitoring station (20) is configured to analyze the data received from the output sensor module (11) to calculate usage.

17. A monitoring system according to claim 16, where the monitoring station (20) is configured to calculate a usage charge based on the usage.

18. A monitoring system according to claim 1, wherein the monitoring station (20) is configured to analyze the data received from the output sensor module (11) to calculate a preventative maintenance schedule.

19. A monitoring system according to claim 1, wherein the monitoring station (20) is configured to turn the water purification device on or off via the communications system (17).

20. A monitoring system according to claim 1, wherein the monitoring station (20) is configured to pre-heat the water purification device prior to use via the communications system (17).
